# EUROPÄISCHE PATENTANMELDUNG

(11) **EP 0 539 706 A1**
(43) Veröffentlichungstag der Anmeldung: **05.05.1993**
(21) Anmeldenummer: 92115672.5
(22) Anmeldetag: 14.09.1992
(51) Int. Cl.: B60T 8/36, B60T 13/68

(54) **Druckmittelbetätigtes Relaisventil für eine blockiergeschützte Fahrzeugbremsanlage**

(30) Priorität: 29.10.1991 DE 4135638
(71) Anmelder: KNORR-BREMSE SYSTEME FÜR NUTZFAHRZEUGE GmbH, 80809 München (DE)
(72) Erfinder: Fries, Ansgar, W-8000 München 80 (DE); Eckhart, Alfred, W-8000 München 60 (DE); Vollmer, Otto, W-8000 München 21 (DE)

(57) **Zusammenfassung**

Bei einem druckmittelbetätigten Relaisventil (1) für eine blockiergeschützte Fahrzeugbremsanlage ist eine Schalteinrichtung, bestehend aus Magnetventilen, vorgesehen, welche gegenüber dem Relaisventil wirkt. Um Gleichlaufunterschiede zwischen dem im Steuerraum (3) des Relaisventils (1) wirkenden Steuerdruck und dem vom Relaisventil ausgesteuerten Bremsdruck zu reduzieren, ist an den Steuerraum (3) des Relaisventils direkt ein Zusatzvolumen (51) angeschlossen, wobei sich in der Verbindung zwischen Zusatzvolumen (51) und Steuerraum (3) eine Drossel (53) bzw. ein Drossel-Rückschlagventil (59) befindet.

## Beschreibung

Die Erfindung betrifft ein druckmittelbetätigtes Relaisventil nach dem Gattungsbegriff des Patentanspruches 1.

Bei Ventileinrichtungen der gattungsgemäßen Art (DE-OS 22 19 212) treten in Phasen des schnellen Druckanstiegs und des Drucksenkens starke Gleichlaufunterschiede zwischen Steuerdruck und Bremsdruck auf, was beim Übergang in Phasen des Druckhaltens ein noch weiteres Ansteigen oder Absenken des Bremsdruckes zur Folge hat. Die Auswirkungen sind die, daß beim Einsetzen der blockiergeschützten Fahrzeugbremsanlage starke Einbrüche der Radbremsgeschwindigkeit auftreten.

Davon ausgehend besteht die Aufgabe der Erfindung darin, ein druckmittelbetätigtes Relaisventil der gattungsgemäßen Art so weiterzubilden, daß die Gleichlaufunterschiede zwischen Steuerdruck und ausgesteuertem Bremsdruck auf ein Mindestmaß reduziert werden können, insbesondere beim Druckhalten nach Belüften oder Druckabsenken. Die zur Lösung dieser Aufgabe dienenden Mittel sollen von baulich einfacher Art sein; ihre Funktion soll unabhängig von der Art der für die Magnetventile verwendeten Regelalgorithmen gewährleistet sein.

Zur Lösung dieser Aufgabe dienen die Merkmale nach dem Kennzeichnungsteil des Patentanspruches 1.

Durch den unmittelbaren Anschluß des über die Düse bzw. Drossel beund entlüftbaren Zusatzvolumens ist es ermöglicht, den beim Druckabsenken-Druckhalten und beim Druckerhöhen-Druckhalten bisher existierenden Gleichlaufunterschied zwischen Steuerdruck und Bremsdruck beträchtlich zu reduzieren. Das Zusatzvolumen wirkt in Form eines nachspeisenden oder nachzuspeisenden Puffers, welcher das Druckverhalten innerhalb des Steuerraums beeinflußt und hierdurch bei den Haltephasen eine in Richtung Verbesserung des Gleichlaufs wirkende Funktion besitzt.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
- Fig.1: der Zeichnung ist eine Schnittansicht einer erfindungsgemäßen Ventileinrichtung;
- Fig.2: gibt die Ventileinrichtung nach Fig.1 in schematischer Darstellung wieder;
- Fig.3: ist eine der Fig.2 vergleichbare schematische Darstellung einer weiteren Ausführungsform nach der Erfindung;
- Fig.4: ist eine der Fig.1 entsprechende Schnittansicht einer weiteren Ausführungsform nach der Erfindung; und
- Fig.5 u. 6: sind vergleichende Darstellungen der Wirkungsweise der Ventileinrichtung gemäß dem Stand der Technik (Fig.5) gegenüber derjenigen gemäß der Erfindung (Fig.6).

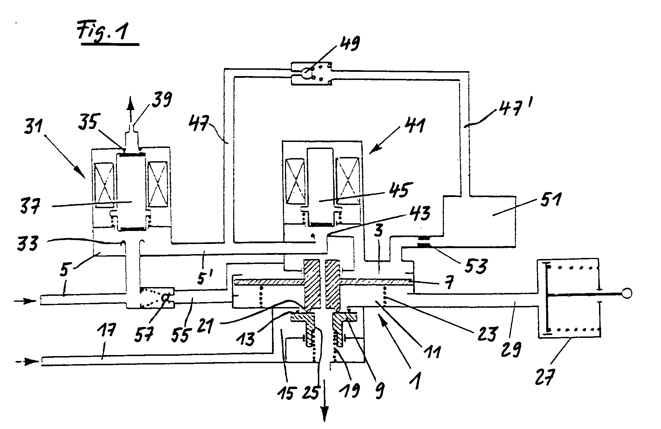

Gemäß Fig.1 weist eine blockiergeschützte Fahrzeugbremsanlage nach der Erfindung ein Relaisventil 1 auf, dessen Steuerraum 3 über eine teilweise als Kanal ausgebildete Steuerleitung 5,5' an ein (nicht dargestelltes) Steuerventil von beliebiger Art angeschlossen ist. Das seinem grundsätzlichen Aufbau und dem Wirkprinzip nach an sich bekannte Relaisventil 1 weist einen Kolben 7 auf, welcher einen Ventilkörper 9 steuert. Die Ventilkammer 11 des Relaisventils ist über den im Gehäuse integrierten Einlaßsitz 13 von der Einlaßkammer 15 getrennt; diese ist über eine Einlaßleitung 17 an einen (nicht dargestellten) Vorratsbehälter für Druckluft angeschlossen. Der Ventilkörper wird durch eine Feder 19 und eine Druckkraftkomponente (bei druckkompensierter Ausführung entfällt diese Kraft) an den Einlaßsitz 13 gedrückt. Der Kolben 7 trägt an seinem unteren Ende den Auslaßsitz 21 und wird durch eine Feder 23 beaufschlagt. Der Ventilkörper 9 besitzt eine zentrale Öffnung 25 zur raschen Entlüftung des Bremszylinders 27, der über eine Leitung 29 an die Ventilkammer 11 angeschlossen ist.

In der Steuerleitung 5,5' zum Steuerraum 3 befinden sich zwei Magnetventile. Das eine Magnetventil weist als Umschaltventil 31 zwei Ventilsitze 33,35 auf. In der einen Schließstellung des Magneten 37 des Umschaltventils auf dem Ventilsitz 33 ist die Steuerleitung 5 vom Steuerraum 3 abgetrennt, gleichzeitig ist der Ventilsitz 35 geöffnet, so daß Druckluft aus der Steuerleitung 5' über den Auslaß 39 ins Freie abströmen kann. Im Auslaß kann sich eine Düse mit einem bestimmten Querschnitt befinden, über welche die Druckluft gedrosselt abströmt.

Das dem Umschaltventil 31 nachgeschaltete Absperrventil 41 weist einen Ventilsitz 43 auf; in der Schließstellung des Magneten 45 des Absperrventils 41 ist der Steuerraum 3 des Relaisventils von der Steuerleitung 5' bzw. 5 abgesperrt. In der Steuerleitung 5' zwischen den beiden Magnetventilen befindet sich erfindungsgemäß ein Anschluß für eine Abzweigleitung 47,47' mit einem Rückschlagventil 49 und einem Zusatzvolumen 51, welches über eine Drossel 53 mit dem Steuerraum 3 in Verbindung steht. Das Rückschlagventil 49 ist derart ausgebildet, daß Druckluft nicht aus dem Zusatzvolumen 51 über die Abzweigleitung 45,47' in die Steuerleitung 5' gelangen kann. Die Düse bzw. Drossel 53 und das Rückschlagventil 49 sind so dimensioniert, daß im Zusatzvolumen 51 immer ein um ein bestimmtes Maß geringerer Druck als im Steuerraum 3 vorhanden ist.

An den Steuerraum 3 kann sich eine Abzweigung 55 anschließen, in der sich ein weiteres Rückschlagventil 57 befindet. Über das Rückschlagventil 57 kann Druckluft aus dem Steuerraum 3 in die Steuerleitung 5 strömen, jedoch nicht umgekehrt.

Die beiden Magnetventile (Umschaltventil 31 und Absperrventil 41) sind über elektrische Leitungen an eine elektronische Schaltung angeschlossen, welche die beiden steuert. Im unerregten Zustand befinden sich die beiden Magnetventile in der in Fig.1 dargestellten Stellung, in welcher das Umschaltventil 31 die Steuerleitung 5,5' in Richtung des Steuerraums 3 freigibt, während der Auslaß 39 abgesperrt ist. Das Absperrventil 41 gibt im unerregten, in der Zeichnung dargestellten Zustand den Weg von der Steuerleitung 5,5, in den Steuerraum 3 frei.

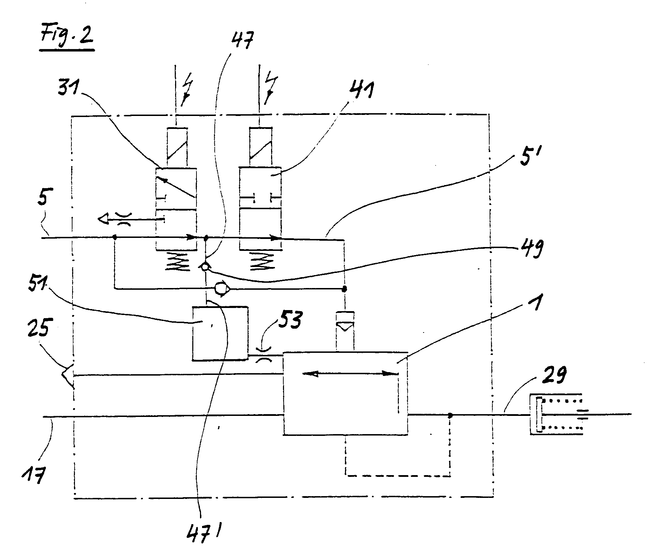

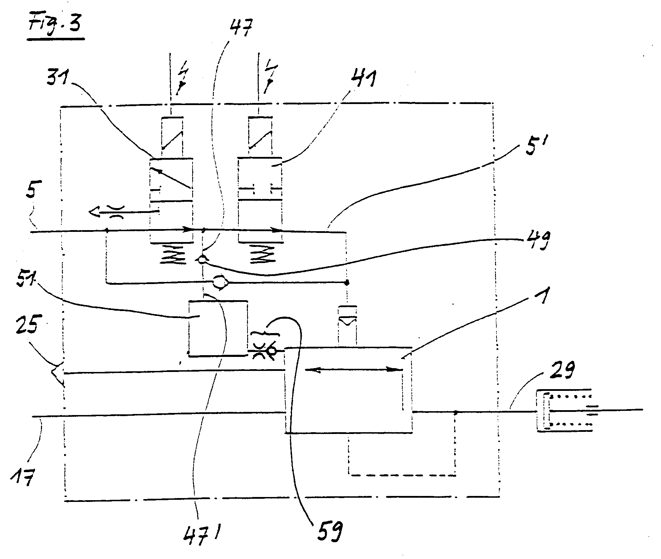

In Fig.2 ist die in Fig.1 erläuterte Ventileinrichtung schematisch wiedergegeben, wobei gleiche Teile identische Bezugszahlen tragen. Die in Fig.3 gleichfalls schematisch wiedergegebene Ausführungsform nach der Erfindung unterscheidet sich von derjenigen nach Fig.2 dahingehend, daß anstelle der Drossel 53 ein Drossel-Rückschlagventil 59 vorgesehen ist.

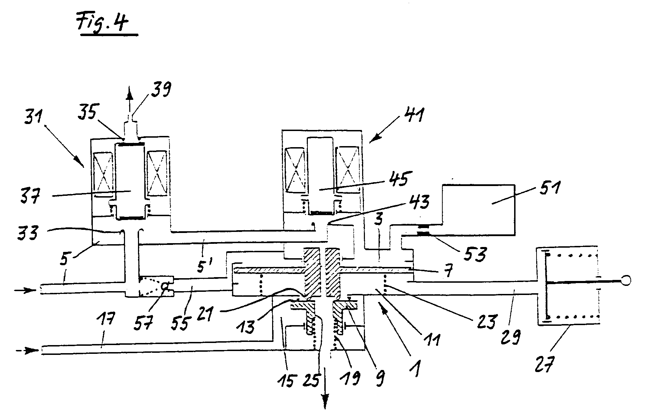

In Fig.4 der Zeichnung ist eine Ausführungsform der Erfindung wiedergegeben, bei welcher in gleicher Weise das Zusatzvolumen 51 über eine Düse bzw. Drossel 53 gefüllt oder entleert wird. Die Abzweigleitung mit integriertem Rückschlagventil, wie in der Ausführungsform nach Fig.1 dargestellt, entfällt jedoch. Bei dieser Ausführung spielt die Reihenfolge der Anordnung der beiden Magnetventile - zuerst das Umschaltventil, dann das Absperrventil oder umgekehrt - keine Rolle.

Die Wirkungsweise der vorstehend beschriebenen Ventileinrichtung ist wie folgt :
Beim Bremsen strömt Druckluft vom (nicht dargestellten) Steuerventil ungehindert über die nicht erregten Magnetventile in den Steuerraum 3 des Relaisventils 1, drückt auf den Kolben 7 und schiebt diesen entgegen den vorbeschriebenen Kräften nach unten. Auch über das Rückschlagventil 49 der Ausführungsform nach Fig.1 kann Druckluft durch das Zusatzvolumen 51 und die Drossel 53 in den Steuerraum 3 strömen. Der Auslaßsitz 21 am Kolben 7 schließt, gleichzeitig öffnet der Einlaßsitz 13 und läßt Druckluft über die Einlaßleitung 17, die Einlaßkammer 15, die Ventilkammer 11 und die Leitung 29 in den Bremszylinder 8 strömen. Beim Lösen, d.h. bei der mit Hilfe des (nicht dargestellten) Steuerventils vorgenommenen Druckabsenkung im Steuerraum 3, schließt der Einlaßsitz 13 und der Auslaßsitz 21 öffnet, so daß die Druckluft aus dem Bremszylinder 27 zurück über die Leitung 29, die Ventilkammer 11 und die zentrale Öffnung 25 im Ventilkörper 9 ins Freie strömen kann.

Bei Blockiergefahr werden von der Elektronik die beiden Magnetventile nach einem vorgegebenen Regelalgorithmus geschaltet. Bei einer notwendigen Druckabsenkung wird das Umschaltventil 31 erregt, wodurch die Luft im Steuerraum 3 über die Steuerleitung 5', den Ventilsitz 35 und den Auslaß 39 ins Freie abströmen kann. Kommt von der Elektronik das Signal zum erneuten Druckanstieg, wird das Umschaltventil 15 wieder entregt, d.h. die Funktionsstellung nach Fig.1 wird herbeigeführt, so daß der Ventilsitz 35 schließt und die Druckluft wieder ungehindert in den Steuerraum 3 strömt.

Gibt die Elektronik während einer Phase des Druckanstiegs das Signal zum Druckhalten, so wird das Absperrventil 41 erregt, d.h. geschaltet, so daß der Ventilsitz 43 schließt und die Steuerleitung 5,5' vom Steuerraum 3 abgesperrt ist. Bei der Ausführungsform nach Fig.1, 2 und 3 wird hierbei je nach Auslegung von Düsen- bzw. Drosselgröße und Öffnungsdruck des Rückschlagventils bei einer Druckdifferenz zwischen dem Steuerraum 2 und der Steuerleitung 5,5' über die Zuleitung 47,47', das Zusatzvolumen 51 und die Drossel 53 eine zusätzliche gedüste Belüftung des Steuerraums eingeleitet. Entsprechend dem dadurch bedingten langsamen Druckanstieg wird von der Elektronik je nach Regelalgorithmus das Umschaltventil 31 zusätzlich erregt, wodurch der Ventilsitz 33 schließt und die Steuerleitung 3 vom Steuerraum 3 abgetrennt ist. Da, wie vorstehend beschrieben, die Drossel 53 und das Rückschlagventil 49 so dimensioniert sind, daß beim Belüften im Zusatzvolumen immer ein bestimmter geringerer Druck als im Steuerraum 2 vorhanden ist, ergibt sich erfindungsgemäß beim Übergang vom Druckanstieg zum Druckhalten der wesentliche Vorteil, daß durch das Zusatzvolumen der im Steuerraum 3 existierende Steuerdruck etwas abgesenkt wird, d.h. daß der Bremsdruck in der Druckhalte-Phase nur noch unwesentlich weiter ansteigt, der Gleichlaufunterschied zwischen Steuerdruck und Bremsdruck ist durch die Aufnahmewirkung des Zusatzvolumens 51 folglich stark herabgesetzt.

Soll beim Druckabsenken, wie oben beschrieben, auf eine Druckhalte-Phase übergegangen werden, so ergeben sich zwei Möglichkeiten für die Elektronik. Entweder das Umschaltventil 31 bleibt in seiner beim Absenken des Druckes eingenommenen Position und zusätzlich wird das Absperrventil 41 erregt oder es wird das Umschaltventil 31 entregt und gleichzeitig wird das Absperrventil 41 erregt, was dieselben Auswirkungen entsprechend der erfindungsgemäßen Ausführung, wie oben beschrieben, hat. Es wird der Vorteil erreicht, daß der Steuerdruck beim Druckabsenken nach dem Signal "Druckhalten" durch das Zusatzvolumen 51 - nunmehr in entgegengesetzter Richtung wirkend - angehoben wird. Die sogenannte Untersteuerung zwischen Steuerdruck und Bremsdruck wird kleiner, je größer dieses Zusatzvolumen 51 wird und je besser die Angleichung des Druckverlaufs an den Abfall des Zylinderdruckes gelingt.

Erlaubt die Regelung der Ventilanordnung auf den Vorteil eines langsamen Druckanstieges zu verzichten, so kommt die Ausführungsform nach Fig.4 zur Anwendung, bei welcher die Abzweigleitung 47, 47' nicht vorgesehen ist, bei welcher jedoch im übrigen die gleiche vorteilhafte Wirkungsweise des Zusatzvolumens vorliegt.

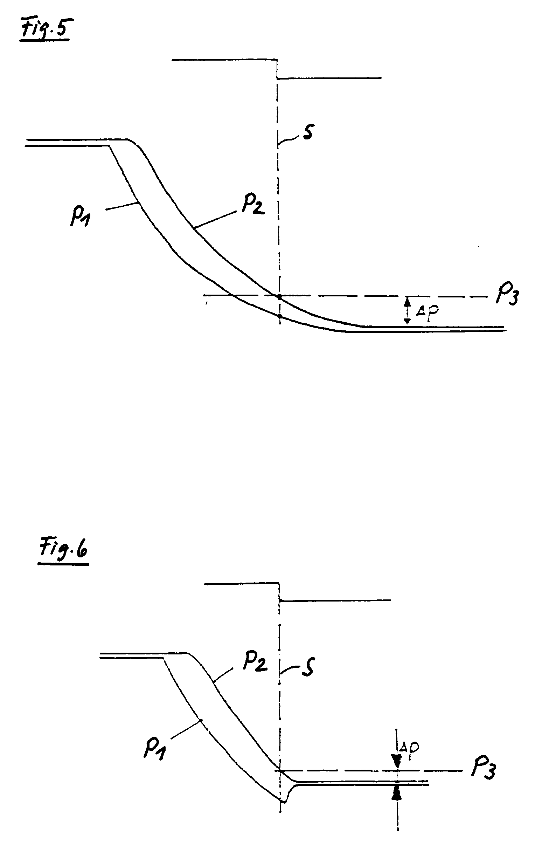

Zur Erläuterung der Wirkungsweise der Ventileinrichtung und zur Verdeutlichung der Erfindung ist in Fig.5 bei einer Anordnung nach dem Stand der Technik die Phase Druckabsenken-Druckhalten dargestellt. Es ist ersichtlich, daß nach dem Signal S für "Druckhalten" der Steuerdruck p1 noch aufgrund der sogenannten Magnet-Verzugszeit und der Expansion des Steuerraumvolumens absinkt, während der Bremszylinderdruck p2, also der ausgesteuerte Bremsdruck, erst nach einer erreichten Druckdifferenz p unterhalb des gewünschten Haltedruckes p3 konstant bleibt.

Demgegenüber ist in Fig.6 der erfindungsgemäße Druckverlauf bei derselben Phase Druckabsenken-Druckhalten dargestellt. Durch das Zusatzvolumen 51 bzw. dessen nachspeisende Eigenschaft wird der Steuerdruck angehoben; die sogenannten Untersteuerung wird kleiner, je größer dieses Zusatzvolumen wird und je besser die Angleichung des Druckverlaufs an den Abfall des Bremsdruckes gelingt. Es ist verdeutlicht, daß die Druckdifferenz p zwischen gefordertem Haltedruck p3 und sich einstellendem Druck wesentlich geringer ist.

Wie vorstehend erläutert, wird bei der Phase Druckanstieg-Druckhalten der voreilende, höhere Steuerdruck entsprechend durch das vorhandene Zusatzvolumen abgesenkt und erzielt die gleiche Wirkung wie bei der Phase des Druckabsenken-Druckhaltens.

Bei der Entlüftung tritt aufgrund des schnelleren Vorgangs (höherer Druckgradient) ein höherer Gleichlaufunterschied zwischen Steuer- und Bremsdruck gegenüber der Belüftung auf. Soll nur der Gleichlauf beim Entlüften verbessert werden, ist statt der Drossel 53 das Drosselrückschlagventil 59 (Fig.3) vorzusehen. Über dieses Drosselrückschlagventil kann eine gezielte Ansprech-Druckdifferenz eingestellt werden.

### Bezugszeichenliste

- 1: Relaisventil
- 3: Steuerraum
- 5,5': Steuerleitung
- 7: Kolben
- 9: Ventilkörper
- 11: Ventilkammer
- 13: Einlaßsitz
- 15: Einlaßkammer
- 17: Einlaßleitung
- 19: Feder
- 21: Auslaßsitz
- 23: Feder
- 25: Öffnung
- 27: Bremszylinder
- 29: Leitung
- 31: Umschaltventil
- 33: Ventilsitz
- 35: Ventilsitz
- 37: Magnet
- 39: Auslaß
- 41: Absperrventil
- 43: Ventilsitz
- 45: Magnet
- 47,47': Abzweigleitung
- 49: Rückschlagventil
- 51: Zusatzvolumen
- 53: Drossel
- 55: Abzweigung
- 57: Rückschlagventil
- 59: Drossel-Rückschlagventil

## Patentansprüche

1. Druckmittelbetätigtes Relaisventil für eine blockiergeschützte Fahrzeugbremsanlage, mit einem im Gehäuse des Relaisventils angeordneten, von einem Kolben begrenzten Steuerraum und einem von dem Kolben gesteuerten, als Dreiwegeventil ausgebildeten Einlaß- und Auslaßventil zur Überwachung der Druckmittelbeaufschlagung einer einen Anschluß zu einem Bremszylinder aufweisenden Ventilkammer in Abhängigkeit eines in den Steuerraum des Relaisventils eingespeisten Steuerdruckes, wobei sich das Einlaßventil des Relaisventils in einer Verbindung zu einer Druckmittelquelle findet und der Steuerdruck von zwei Magnetventilen überwacht wird, derart, daß das eine Magnetventil als Umschaltventil beim Auftreten eines Signals einen Einlaß zur Belüftung des Steuerraums über eine Steuerleitung schließt und gleichzeitig einen Auslaß freigibt, während das andere Magnetventil als Absperrventil in die Steuerleitung eingeschaltet ist, dadurch gekennzeichnet, daß an den Steuerraum (3) des Relaisventils (1) direkt ein Zusatzvolumen (51) angeschlossen ist und daß sich in der Verbindung zwischen Zusatzvolumen (51) und Steuerraum (3) eine Drossel (53) befindet.

2. Druckmittelbetätigtes Relaisventil nach Anspruch 1, dadurch gekennzeichnet, daß an das Zusatzvolumen (51) eine Abzweigleitung (47,47') angeschlossen ist, welche mit dem zwischen den Magnetventilen befindlichen Abschnitt der Steuerleitung in Verbindung steht, und daß in der Abzweigleitung (47,47') ein in Richtung des Zusatzvolumens (51) öffnendes Rückschlagventil (49) vorgesehen ist.

3. Druckmittelbetätigtes Relaisventil nach einem der vorangehenden Ansprüche, dadurch gekennzeichnet, daß anstelle der Drossel (53) ein in Richtung des Steuerraums (3) öffnendes Drossel-Rückschlagventil (59) vorgesehen ist.
